# EUROPEAN PATENT SPECIFICATION

(11) **EP 3 502 152 B1**
(45) Date of publication and mention of the grant of the patent: **15.07.2020**
(21) Application number: 18213992.3
(22) Date of filing: 19.12.2018
(51) Int. Cl.: C08F 222/10, C08F 226/02, C08F 220/24, B01J 20/26, C08F 212/14, B01J 20/285

(54) **MOLECULARLY IMPRINTED POLYMER, USES THEREOF AND PREPARATION PROCESS**
MOLEKULAR GEPRÄGTES POLYMER,SEINE VERWENDUNG UND VERFAHREN ZU SEINER HERSTELLUNG
POLYMÈRE À EMPREINTE MOLÉCULAIRE, SES UTILISATIONS ET SON PROCÉDÉ DE PREPARATION

(30) Priority: 20.12.2017 IT 201700147588
(43) Date of publication of application: 26.06.2019
(73) Proprietor: Copernico S.R.L., 33100 Udine (IT)
(72) Inventor: D'AGOSTINO, Girolamo, 27040 MEZZANINO (PV) (IT); CENNAMO, Nunzio, 80020 CRISPANO (NA) (IT)
(74) Representative: Marturano, Pasqualino

(56) References cited:
- CAO FENGMEI ET AL: "Synthesis and evaluation of molecularly imprinted polymers with binary functional monomers for the selective removal of perfluorooctanesulfonic acid and perfluorooctanoic acid", JOURNAL OF CHROMATOGRAPHY A, ELSEVIER, AMSTERDAM, NL, vol. 1516, 12 August 2017 (2017-08-12), pages 42-53, XP085184912, ISSN: 0021-9673, DOI: 10.1016/J.CHROMA.2017.08.023
- MEGUMI TAKAYOSE ET AL: "A fluorous synthetic receptor that recognizes perfluorooctanoic acid (PFOA) via fluorous interaction obtained by molecular imprinting", THE ANALYST, vol. 137, no. 12, 1 January 2012 (2012-01-01), page 2762, XP055301924, ISSN: 0003-2654, DOI: 10.1039/c2an15936h
- CENNAMO N ET AL: "Sensors based on surface plasmon resonance in a plastic optical fiber for the detection of trinitrotoluene", SENSORS AND ACTUATORS B: CHEMICAL: INTERNATIONAL JOURNAL DEVOTED TO RESEARCH AND DEVELOPMENT OF PHYSICAL AND CHEMICAL TRANSDUCERS, vol. 188, 12 July 2013 (2013-07-12), pages 221-226, XP028735295, ISSN: 0925-4005, DOI: 10.1016/J.SNB.2013.07.005
- CENNAMO NUNZIO ET AL: "A High Sensitivity Biosensor to detect the presence of perfluorinated compounds in environment", TALANTA, vol. 178, 21 October 2017 (2017-10-21), pages 955-961, XP085275364, ISSN: 0039-9140, DOI: 10.1016/J.TALANTA.2017.10.034

## Description

The present invention relates to a molecularly imprinted polymer, uses thereof and preparation process.

The polymer according to the present invention is particularly suitable for the recognition of perfluoroalkyl compounds in a liquid matrix. Thanks to its high affinity and selectivity towards perfluoroalkyl compounds, the polymer can be advantageously used for the qualitative and quantitative determination of these compounds in liquid matrices, such as for example wastewater, surface water or groundwater, drinking water, biological fluids (e.g. blood, saliva, sweat, urine), beverages and non-aqueous matrices (e.g. organic solvents), and for the removal thereof from the aforesaid liquid matrices.

Perfluoroalkyl compounds, commonly called PFA or PFAS, are synthesized compounds comprising a hydrophobic alkyl chain of variable length (generally from 4 to 16 carbon atoms) and at the end of which there is a polar functional group (mainly carboxylate, sulfonate or phosphate). The alkyl chain may be totally or partially fluorinated: in the former case, the compounds are called perfluorinated compounds, PFC), such as, for example, perfluorooctanoic acid (PFOA) and perfluorooctane sulfonate (PFOS); in the latter case, the compounds are called fluorotelomers.

PFAs are widely used in the textile, cosmetics and pharmaceutical industries and in the production of food packaging and containers, because of their water, oil and grease repellent properties. PFAs have significant chemical inertia, which makes them extremely persistent in the environment, promoting the accumulation thereof in human and animal biological tissues.

One of the most common techniques currently used for removing PFAs from contaminated water is solid phase extraction on porous sorbent materials, such as anion exchange resins and active carbon. For that purpose, sorbents in divided form (e.g. particles, granules, pearls, etc.) are dispersed in the water to be treated inside accumulation basins, where they adsorb the contaminants present therein. Alternatively, the sorbent materials are packed into tubular structures, such as cartridges or columns, inside which the water to be treated flows. In both cases, the sorbents are used until the saturation of their extraction capacity and, once exhausted, they are replaced with new or regenerated sorbents. Exhausted sorbents can be sent to regeneration processes for extracting the adsorbed pollutants and thus restoring the extraction capacity of the sorbent.

The most effectively used sorbents in the state of the art for the adsorption of PFAs from liquid matrices are anion exchange resins. PFAs, and in particular PFOA and PFOS, are in fact present in water in anionic form in a wide pH range. Anion exchange resins, however, are little selective towards PFAs and therefore if the liquid matrix contains PFAs together with high concentrations of other anions - a possibility that occurs frequently in practice - the anion exchange resins do not effectively retain the PFAs.

The sorbents used in the state of the art - like the aforesaid ion exchange resins and active carbon, also have the disadvantage of being able to be reused only after having undergone regeneration treatments with solvents, often at relatively high temperatures, which cause the gradual deterioration thereof until making them completely unusable.

In the state of the art, the analytical methods used for the qualitative and quantitative determination of PFAs in liquid matrices are based on complex and expensive instrumental techniques, such as for example mass spectrometry combined with high performance chromatography.

The analyses performed with known methods generally envisage the collection of a sample of the polluted matrix, the transport thereof to the laboratory, the pre-treatment of the sample and finally the instrumental analysis. Therefore such known analytical methods have long performance times. The pre-treatment of the sample can also imply the alteration thereof, with consequent mistakes in the analytical determinations. A further disadvantage of conventional PFA analysis methods is also the impossibility to perform *in situ* analyses on these substances, i.e. directly in the polluted liquid matrices without the collection and transport of the sample.

In the state of the art polymeric sorbent materials are also known that can selectively separate PFAs from liquid matrices. Such polymeric materials are obtained through molecular imprinting polymerization. In general the molecular imprinting polymerization technique allows polymers to be prepared having specific recognition sites for a target molecule, by synthesizing the polymer in the presence of the target molecule of interest, which acts as a template. Polymers thus produced are known as molecularly imprinted polymers, hereinafter also indicated with the acronym MIP.

MIPs are obtained by polymerizing, generally through radicalic polymerization, at least one functional monomer with a cross-linking agent in the presence of a templating molecule, and subsequently removing the template from the polymeric matrix formed. The functional monomer is a monomer having at least one group that can interact specifically with the target molecule and at least one polymerizable functional group.

CAO FENGMEI ET AL: "Synthesis and evaluation of molecularly imprinted polymers with binary functional monomers for the selective removal of perfluorooctanesulfonic acid and perfluorooctanoic acid",JOURNAL OF CHROMATOGRAPHY A, ELSEVIER, AMSTERDAM, NL, vol. 1516, 12 August 2017 (2017-08-12), pages 42-5, discloses a molecularly imprinted polymer having recognition sites of at least one perfluoralkyl compound, said polymer being obtained by copolymerization of 2-(trifluoromethyl) acrylic acid, 4-vinylpyridine, ethleneglycol dimethacrylate in the presence of at least one perfluooctanoic acid as template.

In patent application IT 102016000003609 in the name of the Applicant, a molecularly imprinted polymer selective for PFAs is described which is obtained using 2-(trifluoromethyl)acrylic acid (TFAA) as the functional monomer, ethylene glycol dimethylacrylate (EGDMA) as the cross-linking agent and PFOA and/or PFOS as the template. Such molecularly imprinted polymer has the disadvantage of being able to adsorb PFOA and PFAS only in liquid matrices with acid pH. In fact, the interaction of PFAs with the molecular recognition sites of the polymer is only effective when the PFAs are present in the liquid matrix in protonated form, which is the reason as to why it is necessary to acidify the liquid matrix before being able to subject it to extraction with the polymer. The MIP in question is therefore unsuitable for use in liquid matrices having neutral or basic pH (e.g. drinking water), for realizing instantaneous analytical determinations of PFAs *in situ* on such matrices or for removing PFAs from such matrices without altering the original chemical characteristics thereof (e.g. pH).

Because of their high selectivity towards the target molecules, MIPs are also used in the state of the art as recognition elements in chemical sensors for the determination of target (analytes) molecules in liquid matrices. In these sensors, the recognition of the analyte by the MIP generates a signal that can be measured through transduction systems, e.g. of the optical or electrical type.

A particular type of the aforesaid sensors, which is characterized by high measurement sensitivity, are sensors based on the phenomenon of surface plasmon resonance (SPR), which is observed when a polarized electromagnetic radiation hits a metal film, in total reflection conditions.

Surface plasmon resonance is an optical phenomenon that derives from the interaction between an electromagnetic wave and the conduction electrons present in a metal element, provided in the form of a thin film. Due to the effect of the incident light, the mobile electrons (plasma) present on the surface of the metal create oscillations (waves) that propagate in a parallel direction to the metal-dielectric interface. Such plasma waves that propagate are called surface plasmon waves. When at a particular angle, the vector of the incident electromagnetic wave couples with the vector of the plasmon wave the conditions of plasmon resonance arise. This coupling of the incident light with the surface plasmons leads to an attenuation of the intensity of the light reflected by the metal film, which can be measured with high precision.

The SPR sensors generally include a conductive layer (metal film) adjacent, on one side, to a dielectric layer and, on the other side, to a recognition element, which can be formed for example by a layer of a molecularly imprinted polymer. When a liquid matrix containing the analyte of interest is in contact with the sensor, the vector of the plasmon wave is determined by the refraction indices of the liquid matrix and of the metal layer. Therefore, as the composition of the liquid matrix containing the analyte or the concentration of the analyte varies, there is a consequent variation in the plasmon wave. Such variation can be measured, for example, in terms of wavelength shift of the reflected wave or attenuation of the intensity thereof.

In consideration of the aforesaid state of the art, the Applicant set out to achieve the primary objective of providing a molecularly imprinted polymer capable of effectively and selectively adsorbing the PFA compounds from a liquid matrix in which these are present.

In particular, within the context of such primary objective, an object of the present invention is to provide a molecularly imprinted polymer selective for PFAs, which effectively adsorbs the PFAs in liquid matrices having substantially neutral or basic pH, so as to avoid the acidification pre-treatment which is instead necessary with the molecularly imprinted polymers of the prior art.

A second object of the present invention is to provide a MIP for the adsorption of PFAs, which can also be easily regenerated after use, also at room temperature, so as to have a longer useful life.

A third object of the present invention is to provide a SPR sensor for the determination of PFAs in liquid matrices, with which it is possible to perform qualitative and quantitative measurements quickly and *in situ,* thus avoiding collecting samples to be subjected to subsequent laboratory analyses.

The Applicant has found that these and other objects, which will be better illustrated in the following description, can be achieved by synthesizing a molecularly imprinted polymer starting from at least one first functional monomer comprising at least one vinyl polymerizable group and an ammonium group together with at least one second functional monomer, of the acrylic or methacrylic type, at least partially fluorinated. In fact, it has been observed that the simultaneous presence of ammonium and fluoride groups on the resulting copolymer allows the adsorption of PFA compounds also in liquid matrices having neutral or basic pH. It is considered that this property derives from the fact that in the polymer according to the invention the recognition of the target molecule (PFA) can take place through a dual interaction mechanism: on one hand, the electrostatic interaction between the negative charges of PFAs in the liquid matrix (anions) and those of the ammonium groups of the copolymer associated with the first functional monomer; on the other hand, the F-F interaction between the fluorine atoms of PFAs and those of the copolymer associated with the second functional monomer.

According to a first aspect, the present invention therefore concerns a molecularly imprinted polymer having recognition sites of at least one perfluoroalkyl compound, said polymer being obtainable through the copolymerization of:
- at least one vinyl monomer comprising at least one ammonium group -N⁺-R¹R²R³, where R¹, R² and R³, equal to or different from each other, are H or a C₁-C₄ alkyl, as first functional monomer;
- at least one at least partially fluorinated (metha)acrylic ester, as second functional monomer;
- at least one cross-linking agent;
in the presence of at least one perfluoroalkyl compound as template.

According to a second aspect, the present invention concerns a process for preparing a molecularly imprinted polymer having recognition sites of at least one perfluoroalkyl compound, which comprises the following steps:
a) preparing a mixture comprising:
   - at least one vinyl monomer comprising at least one ammonium group -N⁺-R¹R²R³, where R¹, R² and R³, equal to or different from each other, are H or a C₁-C₄ alkyl;
   - at least one at least partially fluorinated (metha)acrylic ester;
   - at least one perfluoroalkyl substance as template;
   - at least one cross-linking agent;
b) polymerizing said mixture to obtain a cross-linked polymer containing said template;
c) removing said template to obtain a cross-linked molecularly imprinted polymer having recognition sites of said perfluoroalkyl compound.

According to a third aspect, the present invention concerns a sorbent material in divided form for the adsorption of perfluoroalkyl compounds comprising at least the aforesaid molecularly imprinted polymer, said polymer being possibly supported on at least one substrate.

According to a fourth aspect, the present invention concerns a chemical sensor for revealing perfluoroalkyl compounds comprising at least one molecular recognition element comprising the aforesaid molecularly imprinted polymer.

According to a fifth aspect, the present invention concerns the use of the aforesaid molecularly imprinted polymer for adsorbing at least one perfluoroalkyl compound in a liquid matrix, said matrix preferably being selected among: water, biological fluid, industrial waste.

According to a further aspect, the present invention concerns a method for detecting the presence of at least one perfluoroalkyl compound in a liquid matrix, which comprises the steps of:
a) providing a measurement system comprising:
   - at least one chemical sensor comprising a molecular recognition element comprising the aforesaid molecularly imprinted polymer;
   - at least one source of a signal for sending an input signal to said chemical sensor;
   - at least one detector for detecting an output signal transmitted by said chemical sensor;
b) placing said molecularly imprinted polymer in contact with said liquid matrix;
c) generating at least one input signal through said source and sending it to said chemical sensor;
d) detecting an output signal transmitted by said chemical sensor;
e) determining the presence of said perfluoroalkyl compound in said liquid matrix through comparison based on said output signal detected in step d).

For the purpose of the present description and the appended claims, the term "perfluoroalkyl compounds" (PFAs) means compounds comprising at least one linear or branched alkyl chain, having at least one polar functional group (mainly carboxylate, sulfonate or phosphate). PFAs include perfluorocarboxylic acids (e.g. perfluorooctanoic acid, PFOA), perfluorosulfonic acids (e.g. perfluorooctane sulfonic acid, PFOS), fluorotelomers or combinations thereof. Typically, the alkyl chain of PFAs contains 4 to 16 carbon atoms.

For the purpose of the present description and appended claims, the verb "comprise" and the terms deriving therefrom also include the verb "consist" and "essentially consist of" as well as the terms deriving therefrom.

As mentioned, the present invention concerns a MIP for the molecular recognition of PFA compounds obtained through the molecular imprinting polymerization technique. For that purpose, at least one PFA compound is used as a templating agent in a polymerizable mixture containing at least the aforesaid first and second functional monomer and at least one cross-linking agent. In the event that a MIP is to be obtained that can selectively interact with two or more corresponding PFAs, it is possible to use a mixture of two or more PFAs as template. However, it is not excluded that the MIP according to the present invention, also when prepared using only one PFA compound as template, is able to adsorb in a liquid matrix PFA compounds having a similar composition to the one used as template.

Optionally, the polymerizable mixture may also comprise at least one radicalic polymerization initiator and one polymerization accelerator.

Advantageously, the polymerizable mixture can also comprise water as a solvent. In fact, in appropriate quantities that can easily be determined by a person skilled in the art, water promotes the solubilization of the components of the mixture. The use of water as a solvent, for example, is particularly suitable where a particularly homogeneous polymerizable mixture is necessary - and therefore in the form of a solution rather than a dispersion - such as for example if the mixture needs to be applied through spin coating to a preformed substrate before being polymerized.

In a preferred embodiment of the present invention, the first functional monomer is a vinyl monomer having general formula (I)

CH₂=CH-[Q]ₙ-N⁺R¹R²R³ (I)

where:
Q is selected among: linear or branched, optionally substituted C₁-C₂₀ alkylene; optionally substituted C₆-C₁₀ arylene, preferably phenylene;
n is equal to 0 or 1;
R¹, R² and R³, equal to or different from each other, are H or a C₁-C₄ alkyl.

Examples of vinyl monomers that can be used for the purposes of the present invention are salts of the following compounds: N,N,N-trimethyl-4-vinylbenzyl ammonium (TMVBA), vinylbenzylammonium salt (VBA).

In a preferred embodiment, the first functional monomer is a vinyl monomer in which the -N⁺-R¹R²R³ ammonium group is a quaternary ammonium group, i.e. where R¹, R² and R³, equal to or different from each other, are a C₁-C₄ alkyl. In fact, such monomer allows a MIP to be obtained that is able to adsorb PFAs in liquid matrices having a pH in the range of values 7 - 10. In a particularly preferred embodiment, the first functional monomer is N,N,N-trimethyl-4-vinylbenzyl ammonium (TMVBA).

In a preferred embodiment of the present invention, the second functional monomer is an at least partially fluorinated (metha)acrylic ester having general formula (II)

CF₃(CF₂)ₙCH₂CH₂OOCCR¹=CH₂ (II)

where:
n is an integer from 1 to 21, preferably from 3 to 13;
R¹ is H or CH₃.

Examples of the aforesaid acrylate or methacrylate esters that can be used for the purpose of the present invention are the following: perfluoropropyl (metha)acrylate, perfluorobutyl(metha)acrylate perfluorohexyl(metha)acrylate, perfluoroheptyl (metha)acrylate, perfluoroctyl(metha)acrylate, perfluorononyl(metha)acrylate, perfluorodecyl (metha)acrylate, perfluoroundecyl(metha)acrylate, perfluorododecyl(metha)acrylate. Preferably, the (metha)acrylate ester is perfluorodecyl acrylate (PF10A).

The cross-linking agent is preferably a molecule having at least two polymerizable functional groups such as, for example: ethylene glycol dimethacrylate (EGDMA), divinylbenzene (DVB), diisopropenylbenzene, (DIB), trimethylolpropane trimethacrylate (TRIM), pentaerythritol triacrylate (PETA). Preferably, the cross-linking agent is EGDMA.

The radicalic polymerization initiators that can be used for the purposes of the present invention include azo-initiators such as azobisisobutyronitrile (AIBN), peroxide initiators, such as ammonium persulfate and potassium persulfate. Preferably, the initiator is AIBN.

The relative quantities of the aforesaid components in the polymerization mixture may vary in wide ranges.

Preferably, the molar ratio between the first functional vinyl monomer and the second functional ester (metha)acrylic monomer is in the range from 0.5:1 to 1:5, more preferably from 1:1 to 1:2.

Preferably, the molar ratio between the moles of template and the total moles of the first and second monomer is in the range from 1:1 to 1:25, preferably from 1:5 to 1:15.

Preferably, the molar ratio between the moles of template and the moles of cross-linking agent is in the range from 1:10 to 1:100, preferably from 1:30 to 1:75.

Preferably, the molar ratio between the moles of template and the total moles of the first and second monomer is in the range from 1:1 to 1:25, preferably from 1:5 to 1:15.

Preferably, the polymerization initiator is present in the polymerizable mixture in a quantity in the range 5 mg - 100 mg, preferably 10 mg - 50 mg, of initiator for every ml of polymerizable mixture.

The pH of the polymerization mixture may have different values as a function of the type of monomer used as the first functional monomer. In fact, in the polymerization mixture, the first functional monomer must contain a positively charged ammonium group. As a function of the type of monomer used, therefore, it is possible to acidify the polymerization mixture in order to guarantee such charge condition. However, the pH is preferably maintained greater than or equal to 3.5, more preferably greater than or equal to 4.5, to prevent the excessive protonation of the template.

The polymerization reaction that leads to the formation of the MIP can be realized with one of the polymerization methods known to a person skilled in the art, such as for example: polymerization by precipitation, in suspension, polymerization in emulsion and polymerization in dispersion.

In a preferred embodiment, the mixture can be heat treated, for example at a temperature in the range of 40°C-85°C, preferably in the range of 50°C-80°C, until obtaining the precipitation of a solid phase with a vitreous consistency. The solid phase can be reduced to a divided form (e.g. powder or granules), e.g. through grinding, and then used as such as sorbent material.

In another preferred embodiment, the mixture can be applied in the form of a film on the preformed support surface (e.g. the recognition region of a chemical sensor or a bead of polymeric material) and then polymerized so as to obtain a support coated with a coating film containing the MIP.

Once the cross-linked polymer is obtained it is treated to remove the template from the polymeric matrix so as to create the recognition sites able to interact with the molecules of the template. The removal of the template can be obtained, for example, by subjecting said cross-linked polymer containing the template to washing with at least one aqueous solution of a mineral acid (e.g. HCl) and subsequently with at least one polar organic solvent (e.g. alcohols, such as methanol, ethanol and the like). Washing with mineral acid has the effect of protonating the carboxyl and sulfonic groups of the PFAs used as templates, therefore weakening the bonding affinity of the PFAs towards the polymeric matrix and promoting removal through subsequent washing with the organic solvent.

The MIPs according to the present invention can be used in different ways. In a first preferred embodiment, the MIPs according to the present invention can be used as sorbent materials for adsorbing the PFA compounds present in a liquid matrix and therefore for separating them therefrom (solid phase extraction). The liquid matrix can be selected, for example, from: wastewater, surface water or groundwater, drinking water, biological fluids (e.g. blood, saliva, sweat, urine), beverages and non-aqueous matrices (e.g. organic solvents).

For solid phase extraction, for example, the sorbent material comprising the MIP can be placed in contact with the liquid matrix containing the PFAs, dispersing it in divided form therewithin, e.g. in the form of powder or granules, possibly supported on another material.

Alternatively, the sorbent material containing the MIP can be housed inside a container to form a filtering element (e.g. a cartridge or a chromatography column). In that case, the purification of the liquid matrix containing the PFAs can be realized by making said liquid matrix flow into the filtering element.

In any case, thanks to the particular composition of the MIP according to the present invention, the adsorption of PFAs can be performed on liquid matrices having a neutral or basic pH, as well as weakly acidic. In general, the pH of the liquid matrix can be greater than or equal to 5. In particular, the MIP according to the present invention operates effectively in liquid matrices having a pH comprised in the range 6-14, more preferably in the range 7-10.

In particular, thanks to the fact that the interaction of the MIPs according to the invention with the PFAs is effective also at pH values of around 7, they can also be used *in situ* for the removal of PFAs, or for the detection thereof through chemical sensors, in surface waters, drinking water, water supply networks, etc.

In a further preferred embodiment, the MIPs according to the present invention can be used as a molecular recognition element in a chemical sensor. The chemical sensor can comprise, for example, the aforesaid recognition element in combination with a transduction system operatively associated thereto.

The chemical sensor can be used to determine the presence of PFA compounds in a liquid matrix and possibly for determining the concentration thereof. In particular, the chemical sensor may be a surface plasmon sensor, this kind of sensors allowing the PFAs present in a liquid matrix to be determined qualitatively and quantitatively also at very low concentrations (e.g. lower than 500 ng/l).

The MIPs according to the present invention, after being used for the adsorption of the PFAs, can be easily regenerated through flushing with mineral acids and polar organic solvents, operating in the same way as illustrated for the removal of the template.

The following embodiment examples are provided for the sole purpose of illustrating the present invention and are not to be understood in a sense limiting the scope of protection defined by the appended claims.

### EXAMPLES

In the following examples reference will be made to the appended figures, which illustrate:
- figure 1, a schematic representation of a fibre optic SPR sensor containing a recognition element comprising a MIP according to the present invention;
- figure 2, a schematic representation of a measurement system comprising the SPR sensor of figure 1;
- figure 3, transmission resonance spectra of the plasmon excitation of a SPR sensor according to the present invention;
- figure 4, Hill curve obtained on the basis of the correlation data between shift of the resonance wavelength (Δλ) and concentration of PFAs in a liquid matrix (expressed in ppb).

### 1. Preparation of a MIP according to the present invention

A polymerization mixture was prepared containing: TMVBA and PF10A as functional monomers, EGDMA as a cross-linking agent, water as a solvent and AIBN as a radicalic initiator. The PFA compound ammonium perfluorooctanoate was used as a template. The aforesaid mixture was prepared by mixing PFA, TMVBA, PF10A and EGDMA in the following molar ratios: PFA:TMVBA:PF10A:EGDMA = 1:4:5:50, obtaining a dispersion in the form of a milky liquid. Water was then added to the dispersion in the amount equal to a EGDMA:water ratio of 17.5:1, obtaining a clear solution. Finally AIBN was added to the clear solution in an amount equal to 25 mg per 1 ml of solution.

The mixture was prepared at room temperature with the aid of an ultrasound bath to facilitate the dissolution of the solids added.

### 2.Preparation of the optical sensor

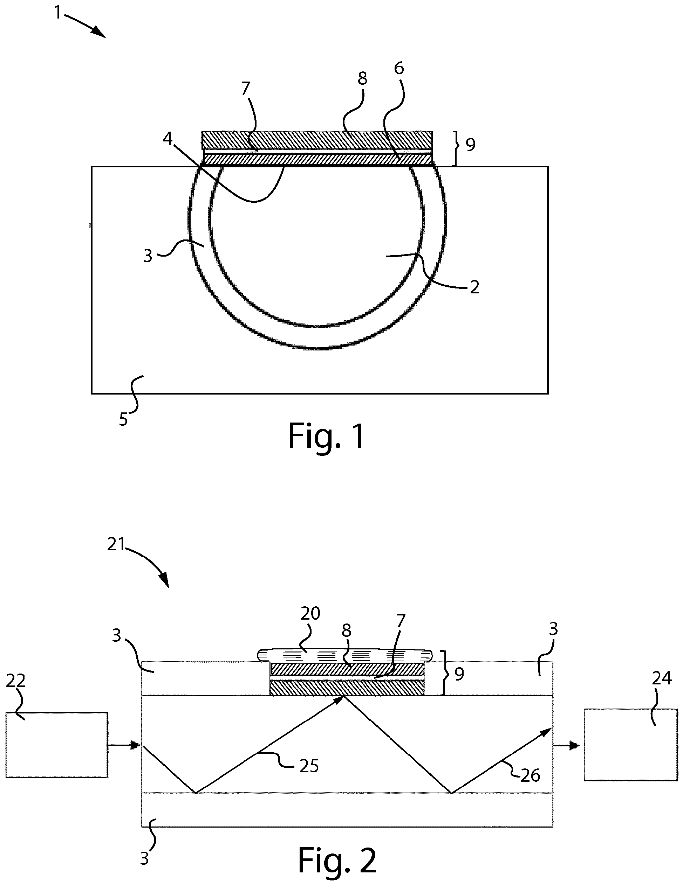

With reference to figures 1 and 2, an optical sensor 1 was prepared as described in the publication Cennamo et al., Sensor and Actuators B, 188 (2013), 221-226, starting from a fibre optic 1 having a core 2 made of polymethylmethacrylate (PMMA) and an outer cladding 3 made of fluorinated polymer (cladding thickness equal to 20 µm; core thickness equal to 980 µm). For easier handling of the sensor, the optic fibre was housed inside a recess obtained inside a resin platform 5. A part of the outer cladding 3 of the optic fibre was removed to leave a portion of the core 2 of the optic fibre exposed. The cladding 3 was removed for a segment about 10 mm long. The removal of the cladding affected about 50% of the circumference of the optic fibre.

To realize an analysis region 9, the uncovered portion of the core was abraded with abrasive paper so as to obtain a substantially planar surface 4, at the same time giving a D-shaped section to the exposed segment of the optic fibre. A layer of photoresist material 6 (Microposit S1813), 1.5 µm thick, was deposited on the exposed surface 4, through spin coating and then a conducting layer formed by a gold film 7 (thickness of 60 nm) through sputtering. The layer of photoresist, which is optional, improves the coupling of the incident radiation with the plasmons of the gold layer.

An aliquot of the polymerizable mixture prepared as described in point 1 (about 50 µl) was distributed onto the conductive film 7, through spin coating. The platform was then heat treated at a temperature of about 70°C for 14 hours, obtaining a layer of MIP 8 with a thickness of 150 nm that acts as a molecular recognition element. The sensor was flushed with ethanol (95% solution) to remove any unreacted monomers and cross-linking agent. Subsequently, the sensor was flushed, in sequence, with 1 M HCl and ethanol to remove the template. The flushing with HCl and ethanol were repeated until complete removal of the template. The sensor was then left exposed to ambient air to make the residual solvents evaporate for about 3 hours.

### 3. Measurement system

With reference to figure 2, a measurement system 21 was provided, configured for spectrum interrogation. For that purpose, a source of white light 22 (halogen lamp with emission band 360-1700 nm) was connected to one end of the optic fibre to send, within the core 2, an incident radiation 23 to the analysis region 9. A detector 24 (spectrometer) was connected at the other end of the optic fibre 2 with a detection range of 200-850 nm.

The spectrometer 24 has the function of recording the resonance spectrum of the plasmon excitation, which takes place at the interface between the gold film 7 and the MIP 8, when the incident radiation 25 (input signal) hits the analysis region 9. In fact, following the interaction, the analysis region 9 transmits an output signal 26 which is detected by the spectrometer 24. When the MIP 8 is in contact with a liquid matrix 20, it reveals any presence of the PFA adsorbing it selectively and causing a variation of the refraction index of the liquid matrix 20. The variation between the input signal at the spectrometer 24 (plasmon resonance peak in the presence of a liquid matrix without PFA) and the output signal (plasmon resonance peak in the presence of a liquid matrix containing PFA) with the consequent shift of the plasmon resonance peak is recorded by the spectrometer 24. The extent of the shift of the peak is a function of the concentration of the analyte of interest.

Alternatively, the input signal may be generated by a monochromatic source, at a predetermined wavelength, recording as the output signal the intensity of the radiation transmitted to the detector. In that case, the presence of the perfluoroalkyl compound is determined on the basis of the variation of the intensity of the output signal detected, due to the effect of the interaction of the compound with the MIP.

### 4. Measurement tests

The effectiveness of the MIP in the adsorption of PFAs was tested by depositing on the surface of the MIP a sufficient quantity of liquid solution to completely cover the layer of MIP.

The solution analysed was prepared starting from a certified reference mixture (CRM) of PFA containing the following PFA compounds, each in a quantity equal to 1000 µg/l:
perfluoropentanoic acid [cas:2706-90-3],
undecafluorohexanoic acid [cas:307-24-4],
perfluoroheptanoic acid [cas:375-85-9],
perfluorooctanoic acid [cas:335-67-1],
perfluorononanoic acid [cas:375-95-1],
perfluorodecanoic acid [cas:335-76-2],
perfluoroundecanoic acid [cas:2058-94-8],
nonafluoro-1-butanesulfonic acid [cas:375-73-5],
perfluorooctanesulfonic acid [cas:1763-23-1],
heptafluorobutyric acid [cas:375-22-4],
tricosafluorodecanoic acid [cas:375-22-4].

The CRM mixture was diluted with deionized water so as to realize a set of samples at a different known concentration. Deionized water not containing PFA was used as a reference sample.

All the samples tested had a pH around 7.

At the end of each measurement, the MIP of the sensor was regenerated by flushing on the surface thereof 1.5 ml of HCl (2% w/w) and 10 ml of ethanol (95% v/v).

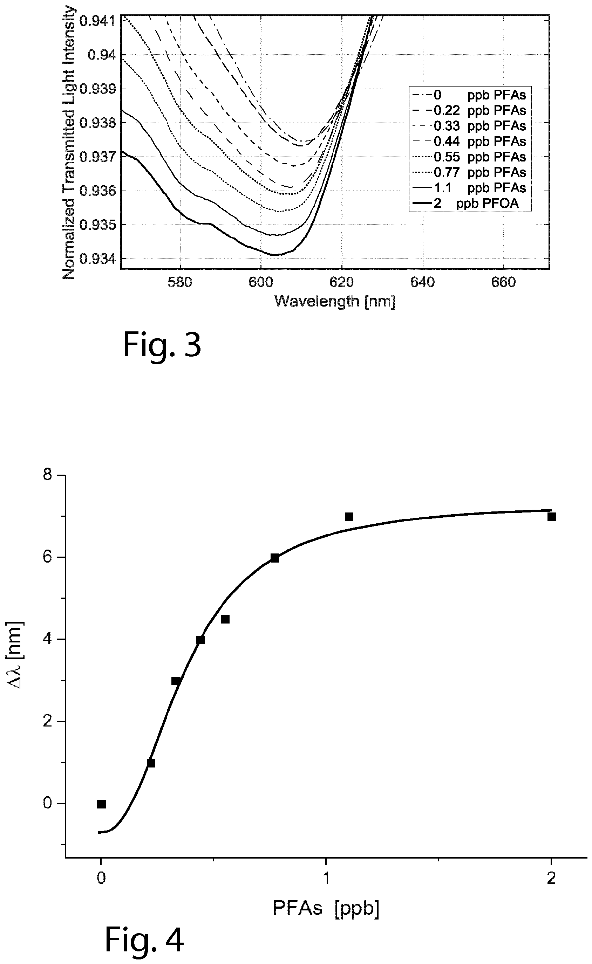

Figure 3 shows the SPR transmission spectra (normalized with respect to the spectrum of the air surrounding the liquid matrix) for the different samples subjected to measurement. From figure 3 it can be deduced that as the concentration of PFA in the sample increases, the resonance peak shifts towards lower wavenumber values, demonstrating the fact that the MIP effectively adsorbs the PFAs present in the liquid matrix at neutral pH conditions.

Figure 4 shows instead the Hill curve obtained on the basis of the measurements performed. From this curve it can be deduced that the response of the SPR sensor is substantially linear up to a PFA concentration of about 1 ppb.

The examples confirm that the sensor is suitable for use for the determination of PFA in liquid matrices and in neutral pH conditions. The sensor is also easily regenerable through flushing with solvent.

## Claims

1. Molecularly imprinted polymer having recognition sites of at least one perfluoroalkyl compound, said polymer being obtainable by copolymerization of:
- at least one vinyl monomer comprising at least one ammonium group -N⁺-R¹R²R³, where R¹, R² and R³, equal to or different from each other, are H or a C₁-C₄ alkyl, as first functional monomer;
- at least one at least partially fluorinated (metha)acrylic ester, as second functional monomer;
- at least one cross-linking agent;
in the presence of at least one perfluoroalkyl compound as template.

2. Polymer according to claim 1, wherein said vinyl monomer is a monomer of general formula (I)
CH₂=CH-[Q]ₙ-N⁺R¹R²R³ (I)
where:
Q is selected among: linear or branched, optionally substituted C₁-C₂₀ alkylene; optionally substituted C₆-C₁₀ arylene, preferably phenylene;
n is equal to 0 or 1;
R¹, R² and R³, equal to or different from each other, are H or a C₁-C₄ alkyl.

3. Polymer according to claim 1, wherein said vinyl monomer is a salt selected among: N,N,N-trimethyl-4-vinylbenzyl ammonium (TMVBA), vinylbenzylammonium salt (VBA).

4. Polymer according to claim 1, wherein said ammonium group -N⁺-R¹R²R³ is a quaternary ammonium group, where R¹, R² and R³, the same as or different from one another, are a C₁-C₄ alkyl.

5. Molecularly imprinted polymer according to claim 1, wherein said at least partially fluorinated (metha)acrylic ester is a compound of general formula (II)
CF₃(CF₂)ₙCH₂CH₂OOCCR¹=CH₂ (II)
where:
n is an integer from 1 to 21, preferably from 3 to 13;
R¹ is H or CH₃.

6. Process for preparing a molecularly imprinted polymer according to claim 1, which comprises the following steps:
a) preparing a mixture comprising:
- at least one vinyl monomer comprising at least one ammonium group -N⁺-R¹R²R³, where R¹, R² and R³, equal to or different from each other, are H or a C₁-C₄ alkyl;
- at least one at least partially fluorinated (metha)acrylic ester;
- at least one perfluoroalkyl compound as template;
- at least one cross-linking agent;
b) polymerizing said mixture to obtain a cross-linked polymer containing said template;
c) removing said template to obtain a cross-linked molecularly imprinted polymer having recognition sites of said perfluoroalkyl substance.

7. Process according to claim 6, wherein said step of removing the template comprises washing said molecularly imprinted polymer containing the template with at least one aqueous solution of a mineral acid and with at least one organic solvent.

8. Sorbent material in divided form for the adsorption of perfluoroalkyl compounds comprising at least one molecularly imprinted polymer according to claim 1, said polymer possibly being supported on at least one substrate.

9. Chemical sensor for detecting perfluoroalkyl substances comprising a molecular recognition element comprising a molecularly imprinted polymer according to claim 1.

10. Surface plasmon resonance chemical sensor for detecting perfluoroalkyl substances having an analysis region comprising at least the following layers in sequence:
- a dielectric layer;
- a conductive layer arranged on said dielectric layer;
- a layer of a molecularly imprinted polymer according to claim 1 arranged on said conductive layer.

11. Sensor according to claim 10 wherein said dielectric layer is an optical fibre.

12. Use of a molecularly imprinted polymer according to claim 1 to adsorb at least one perfluoroalkyl compound in a liquid matrix, said matrix preferably being selected among: water, biological fluid, industrial waste.

13. Method for detecting the presence of at least one perfluoroalkyl compound in a liquid matrix, which comprises the steps of:
a) providing a measurement system comprising:
- at least one chemical sensor comprising a molecular recognition element comprising a molecularly imprinted polymer according to claim 1;
- at least one source of a signal for sending an input signal to said chemical sensor;
- at least one detector for detecting an output signal transmitted by said chemical sensor;
b) placing said molecularly imprinted polymer in contact with said liquid matrix;
c) generating at least one input signal through said source and sending it to said chemical sensor;
d) detecting an output signal transmitted by said chemical sensor;
e) determining the presence of said perfluoroalkyl compound in said liquid matrix based on said output signal detected in step d).

## Patentansprüche

1. Molekular geprägtes Polymer, das Erkennungsstellen von mindestens einer Perfluoralkylverbindung aufweist, wobei das Polymer durch Copolymerisation von:
- mindestens einem Vinylmonomer, das mindestens eine Ammoniumgruppe -N⁺-R¹R²R³ umfasst, worin R¹, R² und R³, die gleich oder voneinander verschieden sind, H oder ein C₁-C₄-Alkyl sind, als erstes funktionelles Monomer;
- mindestens einem zumindest teilweise fluorierten (Metha)acrylsäureester als zweites funktionelles Monomer;
- mindestens einem Vernetzungsmittel;
in Anwesenheit von mindestens einer Perfluoralkylverbindung als Template, erhältlich ist.

2. Polymer gemäß Anspruch 1, wobei das Vinylmonomer ein Monomer der allgemeinen Formel (I) ist
CH₂=CH-[Q]ₙ-N⁺R¹R²R³ (I)
wo:
Q aus Folgendem ausgewählt ist: geradkettigem oder verzweigtem, gegebenenfalls substituiertem C₁-C₂₀-Alkylen; gegebenenfalls substituiertem C₆-C₁₀-Arylen, vorzugsweise Phenylen;
n gleich 0 oder 1 ist;
R¹, R² und R³ gleich oder verschieden voneinander H oder ein C₁-C₄-Alkyl sind.

3. Polymer gemäß Anspruch 1, wobei das Vinylmonomer ein Salz ist, ausgewählt aus: N,N,N-Trimethyl-4-vinylbenzylammonium (TMVBA), Vinylbenzylammoniumsalz (VBA).

4. Polymer gemäß Anspruch 1, wobei die Ammoniumgruppe -N⁺-R¹R²R³ eine quaternäre Ammoniumgruppe ist, worin R¹, R² und R³, die gleich oder verschieden voneinander sind, ein C₁-C₄-Alkyl sind.

5. Molekular geprägtes Polymer gemäß Anspruch 1, wobei der zumindest teilweise fluorierte (Metha)acrylsäureester eine Verbindung der allgemeinen Formel (II) ist
CF₃(CF₂)ₙCH₂CH₂OOCCR¹=CH₂ (II)
wo:
n eine ganze Zahl von 1 bis 21, vorzugsweise von 3 bis 13, ist;
R¹ H oder CH₃ ist.

6. Verfahren zur Herstellung eines molekular geprägten Polymers gemäß Anspruch 1, das folgende Schritte umfasst:
a) Herstellen einer Mischung, Folgendes umfassend:
- mindestens ein Vinylmonomer, das mindestens eine Ammoniumgruppe -N⁺-R¹R²R³ umfasst, worin R¹, R² und R³, die gleich oder voneinander verschieden sind, H oder ein C₁-C₄-Alkyl sind;
- mindestens einen zumindest teilweise fluorierten (Metha)acrylsäureester;
- mindestens eine Perfluoralkylverbindung als Template;
- mindestens ein Vernetzungsmittel;
b) Polymerisieren der Mischung, um ein vernetztes Polymer zu erhalten, das das Template enthält;
c) Entfernen des Templates, um ein vernetztes, molekular geprägtes Polymer zu erhalten, das Erkennungsstellen der Perfluoralkylsubstanz aufweist.

7. Verfahren gemäß Anspruch 6, wobei der Schritt des Entfernens des Templates das Waschen des molekular geprägten Polymers, das das Template enthält, mit mindestens einer wässrigen Lösung einer Mineralsäure und mit mindestens einem organischen Lösungsmittel umfasst.

8. Sorbensmaterial in geteilter Form für die Adsorption von Perfluoralkylverbindungen, umfassend mindestens ein molekular geprägtes Polymer gemäß Anspruch 1, wobei das Polymer möglicherweise auf mindestens einem Substrat getragen wird.

9. Chemischer Sensor zum Nachweis von Perfluoralkylsubstanzen, umfassend ein molekulares Erkennungselement, das ein molekular geprägtes Polymer gemäß Anspruch 1 umfasst.

10. Chemischer Oberflächenplasmonresonanz-Sensor zum Nachweis von Perfluoralkylsubstanzen, der einen Analysebereich aufweist, der mindestens folgende Schichten nacheinander umfasst:
- eine dielektrische Schicht;
- eine leitende Schicht, die auf der dielektrischen Schicht angeordnet ist;
- eine Schicht aus einem molekular geprägten Polymer gemäß Anspruch 1, die auf der leitenden Schicht angeordnet ist.

11. Sensor gemäß Anspruch 10, wobei die dielektrische Schicht eine optische Faser ist.

12. Verwendung eines molekular geprägten Polymers gemäß Anspruch 1 zur Adsorption mindestens einer Perfluoralkylverbindung in einer flüssigen Matrix, wobei die Matrix vorzugsweise aus Folgendem ausgewählt ist: Wasser, biologische Flüssigkeit, Industrieabfall.

13. Verfahren zum Nachweis der Anwesenheit von mindestens einer Perfluoralkylverbindung in einer flüssigen Matrix, das folgende Schritte umfasst:
a) Bereitstellen eines Messsystems, Folgendes umfassend:
- mindestens einen chemischen Sensor, der ein molekulares Erkennungselement umfasst, das ein molekular geprägtes Polymer gemäß Anspruch 1 umfasst;
- mindestens eine Quelle für ein Signal zum Senden eines Eingangssignals an den chemischen Sensor;
- mindestens einen Detektor zum Erfassen eines von dem chemischen Sensor übertragenen Ausgangssignals;
b) Inkontaktbringen des molekular geprägten Polymers mit der flüssigen Matrix;
c) Erzeugen mindestens eines Eingangssignals durch die Quelle und Senden an den chemischen Sensor;
d) Erfassen eines durch den chemischen Sensor übertragenen Ausgangssignals;
e) Bestimmen der Anwesenheit der Perfluoralkylverbindung in der flüssigen Matrix auf der Grundlage des in Schritt d) erfassten Ausgangssignals.

## Revendications

1. Polymère à empreinte moléculaire ayant des sites de reconnaissance d'au moins un composé de perfluoroalkyle, ledit polymère étant apte à être obtenu par la copolymérisation de :
- au moins un monomère vinylique comprenant au moins un groupe ammonium -N⁺-R¹R²R³, où R¹, R² et R³, égaux ou différents entre eux, sont H ou un alkyle en C₁-C₄, comme premier monomère fonctionnel ;
- au moins un ester (méth)acrylique au moins partiellement fluoré, comme second monomère fonctionnel ;
- au moins un agent de réticulation ;
en présence d'au moins un composé de perfluoroalkyle comme modèle.

2. Polymère selon la revendication 1, dans lequel ledit monomère vinylique est un monomère de formule générale (I)
CH₂=CH-[Q]ₙ-N⁺R¹R²R³ (I)
où :
Q est sélectionné parmi : un alkylène en C₁-C₂₀ linéaire ou ramifié, facultativement substitué ; un arylène en C₆ à C₁₀ facultativement substitué, de préférence un phénylène ;
n est égal à 0 ou 1 ;
R¹, R² et R³, égaux ou différents entre eux, sont H ou un alkyle en C₁ à C₄.

3. Polymère selon la revendication 1, dans lequel ledit monomère vinylique est un sel sélectionné parmi : le sel de N,N,N-triméthyl-4-vinylbenzylammonium (TMVBA), de vinylbenzylammonium (VBA).

4. Polymère selon la revendication 1, dans lequel ledit groupe ammonium -N⁺-R¹R²R³ est un groupe ammonium quaternaire, où R¹, R² et R³, identiques ou différents entre eux, sont un alkyle en C₁-C₄.

5. Polymère à empreinte moléculaire selon la revendication 1, dans lequel ledit ester (méth)acrylique au moins partiellement fluoré est un composé de formule générale (II)
CF₃(CF₂)ₙCH₂CH₂OOCCR¹=CH₂ (II)
où :
n est un nombre entier de 1 à 21, de préférence de 3 à 13 ;
R¹ est H ou CH₃.

6. Processus de préparation d'un polymère à empreinte moléculaire selon la revendication 1, qui comprend les étapes suivantes :
a) la préparation d'un mélange comprenant :
- au moins un monomère vinylique comprenant au moins un groupe ammonium -N⁺-R¹R²R³, où R¹, R² et R³, égaux ou différents entre eux, sont H ou un alkyle en C₁-C₄ ;
- au moins un ester (méth)acrylique au moins partiellement fluoré ;
- au moins un composé de perfluoroalkyle comme modèle ;
- au moins un agent de réticulation ;
b) la polymérisation dudit mélange pour obtenir un polymère réticulé contenant ledit modèle ;
c) l'élimination dudit modèle pour obtenir un polymère à empreinte moléculaire réticulé ayant des sites de reconnaissance de ladite substance de perfluoroalkyle.

7. Processus selon la revendication 6, dans lequel ladite étape d'élimination du modèle comprend le lavage dudit polymère à empreinte moléculaire contenant le modèle avec au moins une solution aqueuse d'un acide minéral et avec au moins un solvant organique.

8. Matériau sorbant sous forme divisée pour l'adsorption de composés de perfluoroalkyle comprenant au moins un polymère à empreinte moléculaire selon la revendication 1, ledit polymère étant éventuellement porté sur au moins un substrat.

9. Capteur chimique pour détecter des substances de perfluoroalkyle comprenant un élément de reconnaissance moléculaire comprenant un polymère à empreinte moléculaire selon la revendication 1.

10. Capteur chimique à résonance plasmonique de surface pour détecter des substances de perfluoroalkyle ayant une région d'analyse comprenant au moins les couches suivantes en séquence :
- une couche diélectrique ;
- une couche conductrice agencée sur ladite couche diélectrique ;
- une couche d'un polymère à empreinte moléculaire selon la revendication 1 agencée sur ladite couche conductrice.

11. Capteur selon la revendication 10 dans lequel ladite couche diélectrique est une fibre optique.

12. Utilisation d'un polymère à empreinte moléculaire selon la revendication 1 pour adsorber au moins un composé de perfluoroalkyle dans une matrice liquide, ladite matrice étant de préférence sélectionnée parmi : l'eau, un fluide biologique, des effluents industriels.

13. Procédé pour détecter la présence d'au moins un composé de perfluoroalkyle dans une matrice liquide, qui comprend les étapes de :
a) la fourniture d'un système de mesure comprenant :
- au moins un capteur chimique comprenant un élément de reconnaissance moléculaire comprenant un polymère à empreinte moléculaire selon la revendication 1 ;
- au moins une source d'un signal pour envoyer un signal d'entrée audit capteur chimique ;
- au moins un détecteur pour détecter un signal de sortie émis par ledit capteur chimique ;
b) le placement dudit polymère à empreinte moléculaire en contact avec ladite matrice liquide ;
c) la génération d'au moins un signal d'entrée au travers de ladite source et l'envoi de celui-ci audit capteur chimique ;
d) la détection d'un signal de sortie émis par ledit capteur chimique ;
e) la détermination de la présence dudit composé de perfluoroalkyle dans ladite matrice liquide sur la base dudit signal de sortie détecté à l'étape d).
